Europäisches Patentamt

European Patent Office

Office européen des brevets

(11) Veröffentlichungsnummer: **0 217 136 B1**

## (12) EUROPÄISCHE PATENTSCHRIFT

(45) Veröffentlichungstag der Patentschrift: **09.10.91**

(21) Anmeldenummer: **86111868.5**

(22) Anmeldetag: **27.08.86**

(51) Int. Cl.⁵: **B41B 19/00**

(54) **Photosetzgerät.**

(30) Priorität: **03.09.85 DE 3531458**

(43) Veröffentlichungstag der Anmeldung:
**08.04.87 Patentblatt 87/15**

(45) Bekanntmachung des Hinweises auf die
Patenterteilung:
**09.10.91 Patentblatt 91/41**

(84) Benannte Vertragsstaaten:
**AT BE CH DE FR GB IT LI LU NL SE**

(56) Entgegenhaltungen:
**EP-A- 0 126 469**
**US-A- 3 823 276**
**US-A- 4 260 998**

(73) Patentinhaber: **Scangraphic Dr. Böger GmbH**
**Rissener Strasse 112-114**
**W-2000 Wedel/Hamburg(DE)**

(72) Erfinder: **Holthusen, Bernd**
**Preusserstrasse 12**
**W-2000 Hamburg 52(DE)**

(74) Vertreter: **Dipl.-Phys.Dr. Manitz Dipl.-Ing.,**
**Dipl.-W.-Ing. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**W-8000 München 22(DE)**

**Beschreibung**

Die Erfindung betrifft ein Photosetzgerät mit einem transparenten Kreiszylindersegment, um welches ein photoempfindliches Material mit der Photoschicht nach innen herumlegbar ist, und mit einem von einem entsprechend den zu setzenden Zeichem modulierten Laserstrahl beaufschlagten Drehspiegel, der mit dem Laser, dem Modulator und der Abbildungsoptik auf einem entlang der Achse des Kreiszylindersegments gesteuert verschiebbaren Schlitten angeordnet ist und einen von der Zylinderachse ausgehenden, in Umfangsrichtung des Kreiszylindersegments eine schnelle periodische Abtastbewegung ausführenden Radialfahrstrahl erzeugt.

Bei einem vorbekannten Photosetzgerät dieser Art (DE-OS 33 18 311) sind sämtliche Bauteile auf einem Grundgestell angeordnet, was zu einer relativ aufwendigen baulichen Ausbildung führt und die relative Justierung des Kreiszylindersegments zur Laserabtastanordnung erschwert.

Das Ziel der vorliegenden Erfindung besteht somit darin, ein Photosetzgerät der eingangs genannten Gattung zu schaffen, welches einen übersichtlichen, kompakten baulichen Aufbau besitzt, gleichwohl aber eine solche innere Stabilität aufweist, daß auch bei Anordnung auf einem normalen Gestell eine exakte und störungsfreie Belichtung des photoempfindlichen Materials durch den Radialfahrstrahl gewährleistet ist, wobei sowohl die Montage als auch die Demontage des Gerätes auf einfache Weise möglich sein soll und eine exakte relative Justierung des Kreiszylindersegments zur Laserabtastanordnung möglich ist.

Zur Lösung dieser Aufgabe sieht die Erfindung vor, daß das Kreiszylindersegment stirnseitig an zwei plattenartigen, auf einer Unterlage ruhenden Grundkörpern gehalten ist, die durch eine in radialem Abstand von der Zylinderachse angeordnete, nur von den Grundkörpern getragene, vorzugsweise relativ zu den Grundkörpern senkrecht zur Zylinderachse justierbaren Traverse zu einer starren Anordnung verbunden sind, und daß der Schlitten an der Traverse axial verschiebbar gehalten ist.

Auf diese Weise wird ein äußerst einfacher, gleichwohl aber stabiler und gegen Störungen durch Erschütterungen usw. weitgehend unempfindlicher Aufbau erzielt. Die Grundkörper und die Traverse werden zweckmäßig als relativ schwere Gußteile ausgeführt, wobei die relative Justierbarkeit zwischen der die Laserabtastanordnung tragenden Traverse und den das Kreiszylindersegment tragenden Grundkörpern eine äußerst exakte relative Ausrichtung zwischen der Laserabtastanordnung und dem Kreiszylindersegment gestattet. Für eine qualitativ einwandfreie Belichtung des um das Kreiszylindersegment herumgelegten photoempfindlichen Materials ist es erforderlich, daß der von dem Laser erzeugte Radialfahrstrahl exakt von der Achse des Kreiszylindersegments ausgeht.

Eine vorteilhafte Ausführungsform der Erfindung ist so ausgebildet, daß die Traverse radial innen zwei sich axial erstreckende, in Umfangsrichtung in einem Abstand angeordnete, einander zu- bzw. voneinander weggewandte profilierte Laufflächen trägt, an denen radial außen am Schlitten angeordnete komplementär profilierte Laufräder derart anliegen, daß der Schlitten gegen Bewegungen in senkrecht zur Zylinderachse verlaufenden Ebenen sicher gehalten und nur axial beweglich ist. Dabei sollen die Laufflächen an den entgegengesetzten Längskanten einer Streifenschiene ausgebildet sein, die an der Traverse befestigt sind. Vorzugsweise fällt dabei die Breitenrichtung der Streifenschiene im wesentlichen mit der Umfangsrichtung bzw. einer Sekantenrichtung zusammen. Die Traverse stellt somit nicht nur eine exakte mechanische starre Verbindung zwischen den beiden Grundkörpern her, die für eine einwandfreie Halterung des Kreiszylindersegments erforderlich ist, sondern gewährleistet darüber hinaus auch eine einwandfreie Halterung und Führung des Schlittens entlang der Traverse und damit auch relativ zu den Grundkörpern bzw. dem an ihnen befestigten Kreiszylindersegment.

Für eine baulich kompakte Anordnung verbunden mit einem großen Abtastwinkel ist es zweckmäßig, wenn der Schlitten sich von der Traverse und insbesondere der Streifenschiene im wesentlichen radial nach innen erstreckt und eine in einem radialen Abstand an der Zylinderachse vorbeigehende Tragplatte für die Abtastanordnung aufweist.

Eine besonders vorteilhafte Ausführung der bei dem erfindungsgemäßen Photosetzgerät verwendeten Laserabtastanordnung kennzeichnet sich dadurch, daß auf der Tragplatte optisch aneinander anschließend der Laser nahe den Laufrädern parallel zur Zylinderachse, der Modulator zwischen zwei Umlenkspiegeln parallel zu den Achsen der Laufräder, der Kollimator parallel zum Laser auf der Zylinderachse und der um 45° zur Zylinderachse geneigte, auf dieser liegende Drehspiegel angeordnet sind, der an der Stirnsei-einer mit der Zylinderachse zusammenfallenden Motorwelle befestigt ist.

Dabei ist es vorteilhaft, wenn die Traverse seitlich in Höhe der Zylinderachse angeordnet ist.

Besonders zweckmäßig ist es, wenn die Laufflächen im Abstand vertikal übereinander liegen. Der Schlitten ist also bei paarweise übereinander liegenden Laufrädern seitlich an der Traverse aufgehängt.

Besonders bevorzugt ist eine Anordnung, bei der die Flachseite der Streifenschiene in einer Vertikalebene liegt.

Aufgrund der erfindungsgemäßen Ausbildung genügt es, wenn zu einer einwandfreien und erschütterungsfreien Lagerung des Photosetzgerätes die beiden Grundkörper über elastische Puffer auf einem Traggestell angebracht sind, welches seinerseits normal auf dem Boden eines Betriebsraumes aufgestellt werden kann.

Eine besonders bevorzugte Ausführungsform kennzeichnet sich dadurch, daß das Kreiszylindersegment an einem zumindest annähernd geschlossenen Kreiszylinderkörper ausgebildet ist und die Traverse innerhalb des Kreiszylinderkörpers nahe des vom Kreiszylindersegment abgewandten Wandabschnittes des Kreiszylinderkörpers angeordnet, durch Durchbrechungen in den Grundkörpern hindurchgeführt und axial außerhalb der Stirnseiten des Kreiszylinderkörpers an den Grundkörpern befestigt ist. Hierbei wird also ein zumindest annähernd rundum geschlossener Kreiszylinderkörper verwendet, wodurch das für die optische Abbildungsqualität wichtige Kreiszylindersegment besonders gut stabilisiert wird. Für die Laserbelichtung wird nur ein Teil der Mantelfläche des Kreiszylinderkörpers genutzt. Dennoch besteht der Kreiszylinderkörper vorzugsweise aus einem Stück und ist durchgehend transparent.

Aufgrund dieser Anordnung und des wesentlichen erfindungsgemäßen Merkmals, daß die Traverse selbst das Kreiszylindersegment bzw. den Kreiszylinderkörper nicht tragen muß, sondern allein die beiden Grundkörper zusammenhalten und den Schlitten haltern soll, kann die Traverse in Umfangsrichtung eine so geringe Ausdehnung haben, daß der Winkel, entlang dessen der Radialfahrstrahl eine Belichtung von Photomaterial vornehmen kann, gegenüber der vorbekannten Anordnung (DE-OS 33 18 311) wesentlich erweitert ist. Für eine kompakte Ausbildung, die außerdem die Stabilität der Traverse wesentlich erhöht, ist es zweckmäßig, wenn die Traverse eine der Krümmung des optisch inaktiven Wandabschnitts angepaßte, zylindersegmentartige Form hat.

Hieraus ergibt sich der doppelte Vorteil einer weitgehend platzsparenden Unterbringung der Traverse innerhalb des Kreiszylinderkörpers sowie einer erheblich erhöhten Stabilität gegen Verbiegungen.

Aufgrund der erfindungsgemäßen Ausbildung ist es ohne weiteres möglich, daß die Traverse sich in Umfangsrichtung über einen Winkel von etwa 90° und vorzugsweise über einige Grad weniger als 90° erstreckt. Somit kann das photoempfindliche Material entlang eines Winkels von etwa 270° vom Radialfahrstrahl erfaßt und belichtet werden.

Eine vorteilhafte praktische Ausführungsform kennzeichnet sich dadurch, daß vom mittleren Balkenteil, an dem die Laufflächen bzw. die Streifenschiene angeordnet sind, in entgegengesetzten Umfangsrichtungen zylindersegmentartige schmale Ansätze ausgehen. Auf diese Weise ist die Traverse in dem Bereich, wo sie den Schlitten zu tragen hat, verstärkt ausgebildet.

Für eine einwandfreie und leicht justierbare Verbindung zwischen der Traverse und den Grundkörpern ist es besonders zweckmäßig, wenn in den Endbereichen der Traverse axial außerhalb der Stirnseite des Kreiszylinderkörpers Befestigungsblöcke an der Traverse angeordnet sind, die in Umfangsrichtung bis zu den Ansätzen reichen und von dem Kreiszylindersegment abgewandte, sich in Sekantenrichtung erstreckende ebene Befestigungsflächen aufweisen, denen komplementäre Befestigungsflächen der Grundkörper gegenüberliegen.

Weiter soll hierbei vorgesehen sein, daß die Befestigungsblöcke auch senkrecht zu den in Sekantenrichtung verlaufenden Befestigungsflächen angeordnete Befestigungsflächen aufweisen, denen komplementäre Befestigungsflächen der Grundkörper gegenüberliegen.

Eine besonders zweckmäßige praktische Realisierung dieser Ausführung kennzeichnet sich dadurch, daß ein an den Grundkörpern ausgebildeter U-Halter die an den Grundkörpern ausgebildeten Befestigungsflächen trägt und die offene Seite des U-Halters die Befestigungsblöcke umgreift.

Um die Traverse relativ zu den Grundkörpern auf einfache Weise justieren zu können, sieht eine zweckmäßige Weiterbildung der Erfindung vor, daß die einander zugeordneten Befestigungsflächen jeweils einen Justierabstand aufweisen und durch abstandsveränderliche Mittel definiert aufeinander zu- bzw. voneinander wegbewegbar sind.

Die abstandsveränderlichen Mittel bestehen zweckmäßig aus Druck- und Zugschrauben, welche in von den Befestigungsflächen ausgehenden Gewindebohrungen des Grundkörpers bzw. der Befestigungsblöcke bis zu einer der erwünschten Justierung entsprechenden Tiefe einschraubbar sind. Die Druckschrauben halten dabei die Traverse und die Grundkörper in einem definierten verstellbaren Abstand, während die Zugschrauben die einander gegenüberliegenden Befestigungsflächen gegeneinander bzw. gegen die Druckschrauben ziehen, so daß nach dem Festziehen aller Schrauben in einer definierten Position eine feste und sicher Verbindung zwischen Grundkörpern und Traverse vorliegt.

Für die Montage und Demontage ist es vorteilhaft, wenn die Durchbrechung in Richtung von der Traverse weg eine solche Ausdehnung aufweist, daß der Schlitten mit allen daran angeordneten Bauelementen durch die Durchbrechung hindurch auf die Laufflächen aufschiebbar und in das Innere des Kreiszylinderkörpers einbringbar ist.

Um auch einen weiteren Justierparameter für die Kreiszylinderfläche zur Verfügung zu haben, kann weiter vorgesehen sein, daß der Kreiszylinderkörper im Bereich des Wandabschnitts vorzugsweise in Höhe der Mitte der Traverse einen durchgehenden Längsschlitz aufweist, der durch Schlitzbreitenveränderungsmittel überbrückt ist.

Durch geeignete Einstellung der Schlitzbreitenveränderungsmittel können somit in gewissem Rahmen Verformungen des Kreiszylindersegments bewirkt werden, falls sich dies zu Justierzwecken als erforderlich erweisen sollte.

Eine besonders sichere und unverrückbare Halterung des Kreiszylinderkörpers wird erzielt, wenn dieser auf einen kreiszylindrischen Ringvorsprung der Grundkörper im Paßsitz aufgeschoben ist.

Der definierte Vorschub des Schlittens, der für eine zeilenweise Abtastung des Photomaterials mittels des Radialfahrstrahls erforderlich ist, kann dadurch verwirklicht werden, daß an wenigstens einem Grundkörper eine sich axial zwischen den Grundkörpern erstreckende, definiert angetriebene Spindel drehgelagert ist, die mit einer am Schlitten vorgesehenen Spindelmutter zum definierten Vorschieben des Schlittens zusammenwirkt.

Schließlich ist es zweckmäßig, wenn der Kreiszylinderkörper innerhalb des Kreiszylindersegments mit geringem Abstand von einer lichtundurchlässigen steifen Abdeckung umgeben ist.

Da die Traverse ausschließlich die Aufgabe hat, die beiden Grundkörper in definierten Relativpositionen zueinander festzulegen und den Schlitten für die Laserabtastanordnung zu tragen und einwandfrei axial zu führen, sind die das Zuführwalzenpaar, die Umlenkwalzen und das Abführwalzenpaar enthaltenen Baugruppen an den Grundkörpern angebracht. Dabei ist es zweckmäßig, wenn zur Aufnahme der erwähnten Baugruppen in den Grundkörpern Ausnehmungen vorgesehen sind.

Die Leitbleche und Kassetten können an den erwähnten Baugruppen angebracht sein. Zweckmäßig sind aber die Photomaterialleitbleche teilweise auch dem optisch inaktiven Wandabschnitt des transparenten Zylinderkörpers befestigt, da dieser Abschnitt für die optische Abtastung und auch für die Filmführung ansonsten nicht benötigt wird.

Um den Modulator mit der Radialfahrstrahlabtastbewegung einwandfrei justieren zu können, sieht eine weitere Ausführungsform vor, daß am Schlitten im Winkelbereich des Wandabschnitts ein Umlenkspiegel im Bereich des umlaufenden Radialfahrstrahls anngeordnet ist, der das bei entsprechender Winkelposition des Drehspiegels auf ihn auftreffende Licht auf eine am Schlitten vorgesehene Synchronisierungsdiode wirft. Vor Beginn jeder sich über einen Winkel von etwa 270° erstreckenden Umfangsabtastung fällt also der Radialfahrstrahl auf die erwähnte Diode, was zur Auslösung eines Startsignals für den Modulator ausgenutzt werden kann.

Die Erfindung wird im folgenden beispielsweise anhand der Zeichnung beschrieben; in dieser zeigt:

Fig. 1     eine Stirnansicht des erfindungsgemäßen Photosetzgerätes, wobei alle Bauteile mit Ausnahme des Grundkörpers 12 und der Traverse 13 aus Gründen der Übersichtlichkeit fortgelassen sind,

Fig. 2     eine teilweise geschnittene Stirnansicht des Grundkörpers 12 nach Fig. 1 von der entgegengesetzten Seite wie in Fig. 1,

Fig. 3     eine teilweise geschnittene Ansicht des erfindungsgemäßen Photosetzgerätes nach Linie III-III in Fig. 2, wobei der linke Grundkörper 12 teilweise aufgeschnitten und der rechte Grundkörper 12 nur andeutungsweise gezeigt ist,

Fig. 4     eine schematische Axialansicht des erfindungsgemäßen Photosetzgerätes zur Veranschaulichung auch derjenigen Baugruppen, die in den Fig. 1 bis 3 der Anschaulichkeit halber fortgelassen waren,

Fig. 5     eine schematische perspektivische Ansicht des beim erfindungsgemäßen Photosetzgerät verwendeten Schlittens mit der darauf befindlichen Laserabtastanordnung und

Fig. 6     eine Draufsicht des Gegenstandes der Fig. 5.

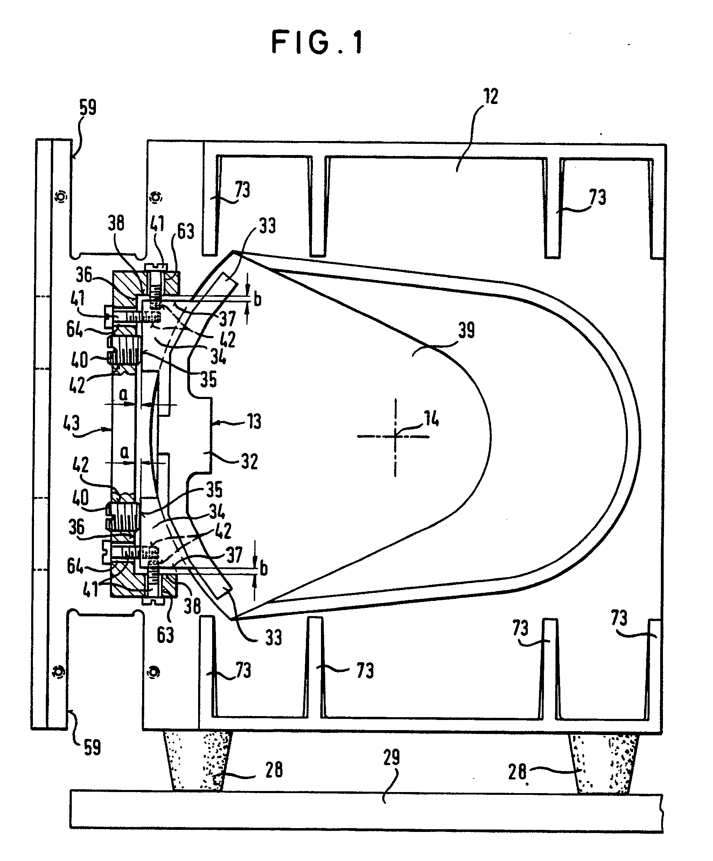

Nach den Fig. 1 bis 3 weist das erfindungsgemäße Photosetzgerät zwei im axialen Abstand angeordnete plattenartige Grundkörper 12 aus Gußmaterial auf, die an ihrer Unterseite über der Schwingungsdämpfung dienende Puffer 28 an einem nicht im einzelnen dargestellten Gestell 29 gelagert bzw. befestigt sind. Verstärkungsrippen 73 (Fig. 1) verstärken die Grundkörper 12 auf der axial äußeren Seite.

An den einander zugewandten Stirnseiten besitzen die Grundkörper 12 zylindrische Ringvorsprünge 48, auf die ein transparenter Kreiszylinderkörper 30 aufgeschoben ist, welcher einen so großen Durchmesser von z.B. 30 cm aufweist, daß in seinem Innern eine Laserabtastanordnung angeordnet werden kann, die ein um den Kreiszylinderkörper 30 herumgelegtes photoempfindliches Material belichten soll.

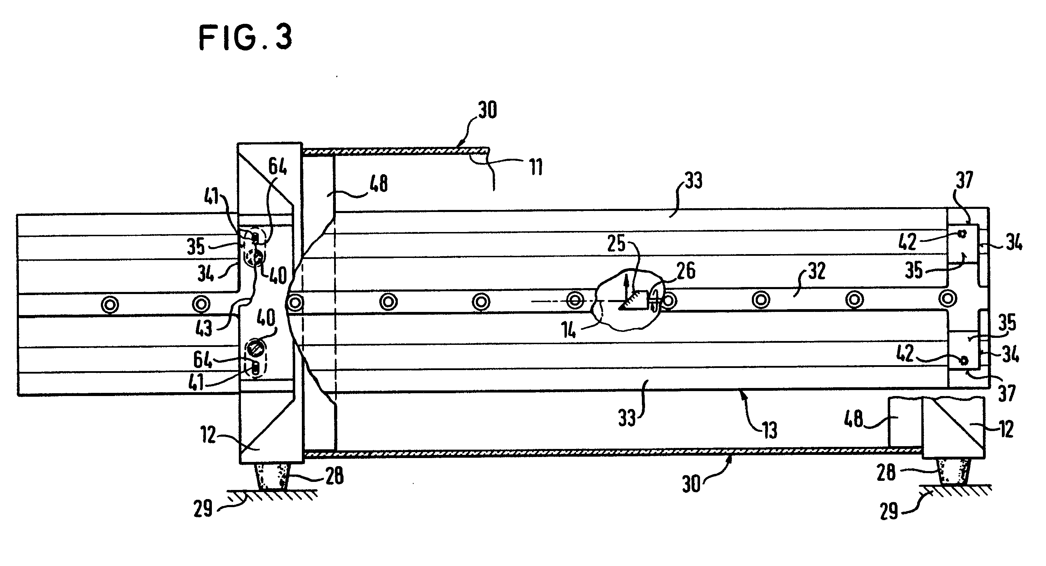

Die beiden Grundkörper 12 sind mechanisch starr miteinander durch eine Traverse 13 verbunden, welche nach den Fig. 1 bis 3 ein mittleres Balkenteil 32 und sich von diesem im wesentlichen in Umfangsrichtung des Kreiszylinderkörpers 30 erstreckende Ansätze 33 aufweist. Die Ansätze 33 und der Balkenteil 32 erstrecken sich durch das Innere des Kreiszylinderkörpers 30 nahe seiner Innenwand hindurch und stehen durch kreissektorähnliche Durchbrechungen 39 hindurch auf der in Fig. 3 rechten Seite etwas und auf der in Fig. 3 linken Seite deutlich über den Grundkörper 12 vor. Das unsymmetrische Vorstehen der Traverse 13 über die Grundkörper 12 ist dadurch bedingt, daß bei dem weiter unten zu beschreibenden Schlitten 15 für die Laserabtastanordnung der Radialfahrstrahl asymmetrisch zum Schlitten erzeugt wird.

Nach den Fig. 1 und 3 weist die Traverse 13 axial im Anschluß an die Stelle des Durchtritts durch die Durchbrechungen 39 der Grundkörper 12 nach hinten vorstehende Befestigungsblöcke 34 auf, die im Bereich der Ansätze 33 an die ebenfalls als Gußteil ausgebildete Traverse 13 mit angegossen sind.

Die Traverse 13 ist nach Fig. 1 seitlich von der Zylinderachse 14 an den Grundkörpern 12 befestigt. Sie besitzt zu diesem Zweck an den Befestigungsblöcken 34 vertikale Befestigungsflächen 35 und horizontale Befestigungsflächen 37, denen jeweils an einem U-förmigen Halter 43 der Grundkörper 12 ausgebildete vertikale Befestigungsflächen 36 bzw. horizontale Befestigungsflächen 38 mit Abständen a bzw. b gegenüberliegen.

Der Zusammenhalt der Befestigungsblöcke 34 mit den U-Haltern 43 wird dadurch gewährleistet, daß durch Bohrungen 63 in den Schenkeln des U-Halters hindurchgesteckte und in Gewindebohrungen 42 der Befestigungsblöcke 34 eingeschraubte Zugschrauben 41 und durch in vertikaler Richtung länglich ausgebildete Löcher 64 im Steg des U-Halters 43 ebenfalls zu Schrauben 41 in Gewindebohrungen 42 der Befestigungsblöcke 34 eingeschraubt sind.

Weiter sind in Gewindebohrungen 42 des Steges des U-Halters 43 Druckschrauben 40 eingeschraubt, die nach Fig. 1 gegen die Befestigungsflächen 35 der Befestigungsblöcke 34 anliegen.

Durch geeignete Einstellung der Druckschrauben 40 und der Zugschrauben 41 können somit die Justierabstände a und b zwischen der Traverse 13 und den Grundkörpern 12 in definierter Weise verändert werden. Nach dem Festziehen aller Schrauben ist eine exakte Relativpositionierung zwischen den Grundkörpern 12 und der Traverse 13 gewährleistet.

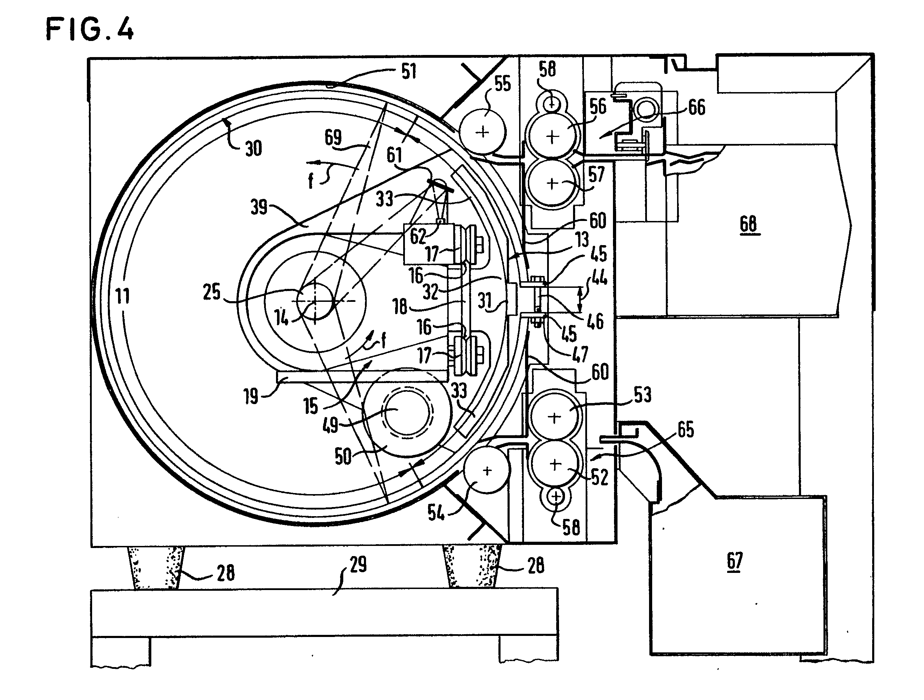

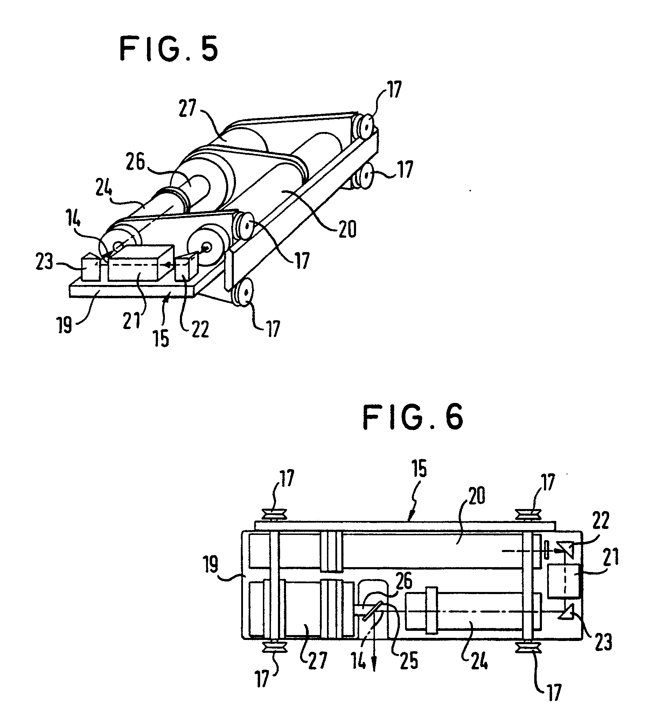

Gemäß Fig. 4 ist an den Balkenteil 32 der Traverse 13 eine mit ihren Flachseiten vertikal stehende Streifenschiene 18 befestigt, bevorzugt angeschraubt, welche an ihren oberen und unteren Kanten dachförmig ausgebildete Laufschienenflächen 16 besitzt, in welche von oben und unten paarweise mit komplementär ausgebildeten Rillen ausgestattete Laufräder 17 im Paßsitz eingreifen. Die paarweise Anordnung der Laufräder 17 läßt sich auch den Fig. 5 und 6 entnehmen.

Die Laufräder 17 sind an einem sich im wesentlichen horizontal von der Traverse 13 in das Innere des Kreiszylinderkörpers 30 erstreckenden Schlitten 15 angeordnet, der eine Tragplatte 19 besitzt, auf der die Laserabtastanordnung befestigt ist. Diese besteht nach den Fig. 5 und 6 aus einem Laser 20, der nahe der Traverse 13 parallel zur Zylinderachse 14 auf der Tragplatte 19 befestigt ist. Am in Fig. 6 rechten Ende der Tragplatte 19 wird der Laserstrahl über einen 90° Umlenkspiegel 22 zum quer angeordneten Modulator 21 gelenkt, während der aus dem Modulator 21 austretende modulierte Laserstrahl über einen weiteren 90°-Umlenkspiegel 23 in den parallel zum Laser 15 auf der Tragplatte 19 befestigten Kollimator 24 eintritt. Der scharf gebündelte Laserstrahl tritt aus dem Kollimator 24 aus und fällt auf einen Drehspiegel 25, der gegenüber der Zylinderachse 14 um 45° geneigt ist, so daß er den Laserstrahl zur Mantelfläche des Kreiszylinderkörpers 30 umlenkt. Der Drehspiegel 25 ist auf der Motorwelle 26 eines zu einer schnellen Drehbewegung antreibbaren Motors befestigt, wobei die Mittelachse der Motorwelle 26 mit der Achse des aus dem Kollimator 24 austretenden Laserstrahls zusammenfällt und durch geeignete Justierung auch mit der Zylinderachse 14.

Nach Fig. 4 ist am Schlitten 15 auch eine Spindelmutter 50 mit parallel zur Zylinderachse 14 verlaufenderAchse angeordnet, durch die eine Spindel 49 hindurchgreift, die zumindest in einem der Grundkörper 12 in nicht dargestellter Weise definiert zu einer Drehbewegung antreibbar gelagert ist. Durch die Drehung der Spindel 49 kann der Schlitten 15 entlang der feststehenden Traverse 13 definiert bewegt werden.

Befindet sich der Schlitten 15 am Anfang seiner Fahrbewegung, so erstreckt er sich teilweise entlang des nach Fig. 3 links über den Grundkörper 12 vorstehenden Bereiches der Traverse 13. Der Radialfahrstrahl wird jetzt am Beginn des Kreiszylinderkörpers 30 erzeugt. Beim Drehen der Spindel 49 bewegt sich der Schlitten 15 dann stetig in Richtung des in Fig. 3 rechten Grundkörpers 12, wobei der Radialfahrstrahl das Innere des Kreiszylinderkörpers 30 zeilenweise abtastet.

Um die Anordnung des Drehspiegels 25 und der Motorwelle 26 relativ zur Traverse 13 und den Grundkörpern 12 zu veranschaulichen, ist die Traverse 13 in Fig. 3 etwa in der Mitte aufgebrochen dargestellt, wobei der Drehspiegel 25 mit dem auffallenden und austretenden Laserstrahl sowie der Motorwelle 26 gezeigt sind.

Aus Fig. 4 ist auch zu erkennen, daß die Mantelfläche des Kreiszylinderkörpers 30 nicht vollständig geschlossen sein muß, sondern etwa im Bereich der Mitte der Traverse 13 einen Langsschlitz 44 aufweisen kann. An den Rändern dieses Langsschlitzes können Winkel 45 befestigt sein, die durch einen oder mehrere Bolzen 46 sowie eine Mutter 47 in Umfangsrichtung zusammengespannt sind. Durch geeignete Verspannung der beiden Ränder mittels der Bolzen 46 können somit gewisse Umfangsjustierungen des Kreiszylinderkörpers vorgenommen werden.

Nach Fig. 4 ist mit Abstand um den Kreiszylinderkörper 30 herum eine Kreiszylinderförmige Abdeckung 51 aus lichtundurchlässigem Material vorgesehen.

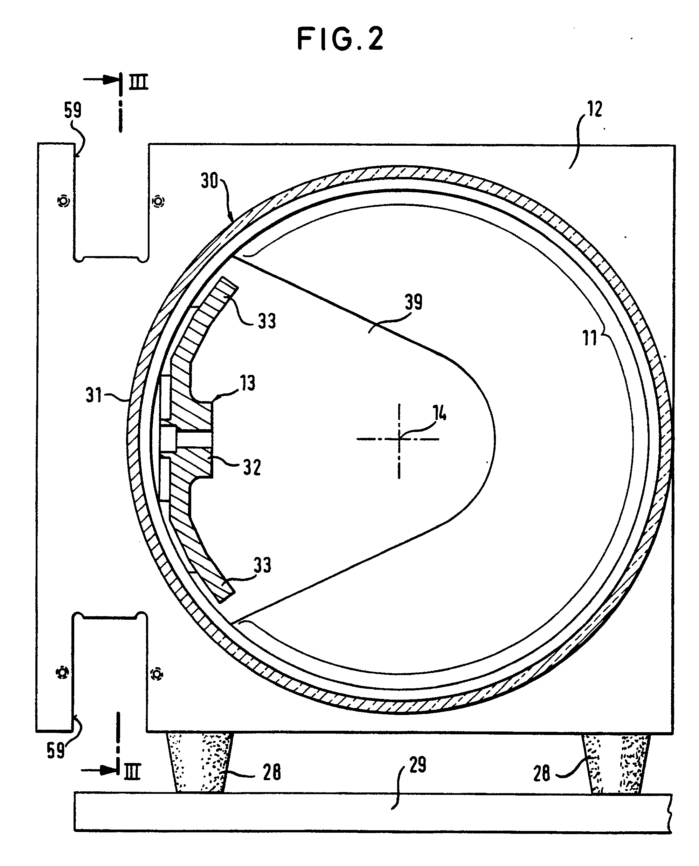

Die die Photomaterialzuführkassette 67, das Photomaterialzuführwalzenpaar 52, 53 und eine Umlenkwalze 54 enthaltende Baugruppe 65 wird ebenso wie die eine Umlenkwalze 55, das Abzugswalzenpaar 56, 57 und die Aufnahmekassette 68 enthaltende Baugruppe 66 lediglich an den beiden Grundkörpern 12 aufgehängt bzw. befestigt, wozu die beiden Grundkörper 12 aus den Fig. 1 und 2 ersichtliche Ausnehmungen 59 aufweisen.

Die für das Photomaterial erforderlichen Leitbleche 60 können an dem optisch inaktiven Wandabschnitt 31 des Kreiszylinderkörpers 30 befestigt sein. Weitere Leitbleche sind an den Baugruppen 65, 66 befestigt.

Nach Fig. 4 ist im oberen Bereich des Schlittens 15 und nahe dem oberen Ende der Traverse 13 ein Umlenkspiegel 61 im Wege des umlaufenden Radialfahrstrahls 69 angeordnet. Der Umlenkspiegel 61 wird vom Radialfahrstrahl 69 erfaßt, wenn dieser
kurz vor der Abtastung des photoempfindlichen Materials steht. Der Umlenkspiegel 61 lenkt das auffallende Laserlicht auf eine Synchronisierungs-Photodiode 62 nach unten um, die über eine geeignete Elektronik die dem Modulator 21 zugeführten Signale mit der Drehposition des Radialfahrstrahls 69 synchronisiert.

Es ist noch darauf hinzuweisen, daß in Fig. 4 der Schlitten nur sehr schematisch ohne die aus den Fig. 5 und 6 im einzelnen ersichtlichen optischen Bauelemente mit Ausnahme des Drehspiegels 25 angedeutet ist.

Aufgrund der beschriebenen baulichen Ausbildung wird der Kreiszylinderkörper 30 in ein optisch aktives, sich über einen Winkel von etwa 270° erstreckendes transparentes Kreiszylindersegment 11 und in einen optisch inaktiven Wandabschnitt 31 unterteilt, der einen Winkelbereich von etwa 90° einnimmt, jedoch zur einwandfreien Halterung und Justierung des Kreiszylindersegments 11 eine wichtige Rolle spielt, und zwar insbesondere dann, wenn mittels der Bolzen 46 die Breite des Längsschlitzes 44 veränderbar ist. Der Wandabschnitt 31 stabilisiert aber auch im übrigen die einwandfreie Position des Kreiszylindersegmentes 11.

Der Zusammenbau und die Funktion des erfindungsgemäßen Photosetzgerätes gehen wie folgt vor sich:
Zunächst wird der Kreiszylinderkörper 30 zwischen den beiden Grundkörpern 12 angeordnet, indem er auf die Ringvorsprünge 48 aufgeschoben bzw. die Ringvorsprünge 48 in die Stirnöffnungen des Kreiszylinderkörpers 30 eingeschoben werden. Alsdann wird die Traverse durch die Durchbrechungen 39 und den Kreiszylinderkörper 30 axial hindurchgeführt und in der aus Fig. 1 ersichtlichen Weise an den Grundkörpern 12 befestigt. Nunmehr bilden die Grundkörper 12 und die Traverse 13 eine starre Anordnung, welche den Kreiszylinderkörper 30 trägt.

Erfindungsgemäß ist die sektorförmige Durchbrechung 39 gemäß den Fig. 1, 2 und 4 so groß ausgebildet und erstreckt sich so weit von der Traverse 13 radial nach innen, daß durch die Durchbrechungen 39 hindurch der in den Fig. 5 und 6 dargestellte Schlitten 15 mit sämtlichen daran angeordneten Bauteilen axial auf die Streifenschiene 13 aufgeschoben werden kann. Danach wird die Spindel 49 in Eingriff mit der Spindelmutter 50 gebracht.

Schließlich werden die die verschiedenen Kassetten und Walzen enthaltenden Baugruppen 65, 66 in den Ausnehmungen 59 der Baugruppen montiert.

Das blattförmige Photomaterial wird aus der Kassette 67 durch die von einer Antriebswelle 58 angetriebenen Einzugswalzen 52, 53 über die Umlenkwalze 54 auf die Außenseite des Kreiszylindersegments 11 geführt und um dieses herum sowie die Ausgangs-Umlenkwalze 55 den ebenfalls durch eine Welle 58. angetriebenen Abzugswalzen 56, 57 zugeführt, von wo das Material in die Aufnahmekassette 68 gelangt.

Durch geeignete Steuerung der verschiedenen Walzen wird eine glatte Anlage des mit der Photoschicht radial nach innen angeordneten photoempfindlichen Materials auf dem Kreiszylinderkörper 30 sichergestellt.

Sobald das Photomaterial auf den sich über 270° erstreckenden Umfang des Kreiszylindersegments 11 in der gewünschten Position angebracht worden ist, beginnt der Laser-Radialfahrstrahl 69 seine Abtast-Kreisbewegung. Der Schlitten 15 befindet sich hierbei zunächst an dem in Fig. 3 linken Ende des Kreiszylinderkörpers 30. Während der rundum beispielsweise in Richtung der Pfeile fin Fig. 4 verlaufenden Abtastbewegung des Radialfahrstrahls 69 schiebt sich der Schlitten angetrieben durch die Spindel 49 langsam in axialer Richtung vor, so daß der Radialfahrstrahl 69 das photoempfindliche Material entlang des Kreiszylindersegments 11 zeilenweise mit geeigneter Modulation abtastet. Nachdem der Schlitten 15 den gesamten Kreiszylinderkörper 30 durchfahren hat, ist die Abtastung beendet. Es ist jedoch nicht erforderlich, daß die Fahrbewegung des Schlittens 15 über die gesamte Lange des Kreiszylinderkörpers 30 erfolgt. Auch Teil-Axialbewegungen sind möglich, wenn das spezielle Setzproblem dies erfordert.

Sollte nach dem Montieren des Schlittens 15 auf der Traverse 13 der von dem Drehspiegel 25 ausgehende Laserstrahl mit seinem Anfangspunkt noch nicht ganz auf der Zylinderachse 14 liegen, so kann durch eine geeignete Verstellung der Justierschrauben 41, 42 die erforderliche Justierung herbeigeführt werden. Eine weitere Justiermöglichkeit ist durch die Verstellung der Bolzen 46 gemäß Fig. 4 gegeben.

## Patentansprüche

1. Photosetzgerät mit einem transparenten Kreiszylindersegment, um welches ein photoempfindliches Material mit der Photoschicht nach innen herumlegbar ist, und mit einem von einem entsprechend den zu setzenden Zeichen modulierten Laserstrahl beaufschlagten Drehspiegel, der mit dem Laser, dem Modulator und der Abbildungsoptik auf einem entlang der Achse des Kreiszylindersegments gesteuert verschiebbaren Schlitten angeordnet ist und einen von der Zylinderachse ausgehenden, in Umfangsrichtung des Kreiszylindersegments eine schnelle periodische Abtastbewegung ausführenden Radialfahrstrahl erzeugt, dadurch **gekennzeichnet,** daß das Kreiszylindersegment (11) stirnseitig an zwei plattenartigen, auf einer Unterlage (29) ruhenden Grundkörpern (12) gehalten ist, die durch eine in radialem Abstand von der Zylinderachse (14) angeordnete, nur von den Grundkörpern (12) getragene Traverse (13) zu einer starren Anordnung verbunden sind, und daß der Schlitten (15) an der Traverse (13) axial verschiebbar gehalten ist.

2. Photosetzgerät nach Anspruch 1 dadurch **gekennzeichnet,** daß die Traverse (13) relativ zu den Grundkörpern (12) senkrecht zur Zylinderachse (14) justierbar ist.

3. Photosetzgerät nach den Ansprüchen 1 oder 2, dadurch **gekennzeichnet,** daß die Traverse (13) radial innen zwei sich axial erstreckende, in Umfangsrichtung in einem Abstand angeordnete, einanderzu- bzw. voneinander weggewandte profilierte Laufflächen (16) trägt, an denen radial außen am Schlitten (15) angeordnete komplementär profilierte Laufräder (17) derart anliegen, daß der Schlitten (15) gegen Bewegungen in senkrecht zur Zylinderachse (14) verlaufenden Ebenen sicher gehalten und nur axial beweglich ist.

4. Photosetzgerät nach Anspruch 3, dadurch **ge-**

**kennzeichnet,** daß die Laufflächen (16) an den entgegengesetzten Längskanten einer Streifenschiene (18) ausgebildet sind, die an der Traverse (13) befestigt ist.

5. Photosetzgerät nach Anspruch 4, dadurch **gekennzeichnet,** daß die Breitenrichtung der Streifenschiene (18) im wesentlichen mit der Umfangsrichtung bzw. einer Sekantenrichtung zusammenfällt.

6. Photosetzgerät nach einem der vorhergehenden Ansprüche, dadurch **gekennzeichnet,** daß der Schlitten (15) sich von der Traverse (13) und insbesondere der Streifenschiene (18) im wesentlichen radial nach innen erstreckt und eine in einem radialen Abstand an der Zylinderachse (14) vorbeigehende Tragplatte (19) für die Abtastanordnung aufweist.

7. Photosetzgerät nach Anspruch 6, dadurch **gekennzeichnet,** daß auf der Tragplatte (19) optisch aneinander anschließend der Laser (20) nahe den Laufrädern (17) parallel zur Zylinderachse (14), der Modulator (21) zwischen zwei Umlenkspiegeln (22, 23) parallel zu den Achsen der Laufräder (17), der Kollimator (24) parallel zum Laser (20) auf der Zylinderachse (14) und der um 45° zur Zylinderachse (14) geneigte, auf dieser liegende Drehspiegel (25) angeordnet sind, der an der Stirnseite einer mit der Zylinderachse (14) zusammenfallenden Motorwelle (26) befestigt ist.

8. Photosetzgerät nach einem der vorhergehenden Ansprüche, dadurch **gekennzeichnet,** daß die Traverse (13) seitlich in Höhe der Zylinderachse (14) angeordnet ist und die Tragplatte (19) vorzugsweise im wesentlichen horizontal verläuft.

9. Photosetzgerät nach Anspruch 8, dadurch **gekennzeichnet,** daß die Laufflächen (16) im Abstand vertikal übereinander liegen.

10. Photosetzgerät nach Anspruch 4 und 9, dadurch **gekennzeichnet,** daß die Flachseite der Streifenschiene (18) in einer Vertikalebene liegt.

11. Photosetzgerät nach einer der vorhergehenden Ansprüche, dadurch **gekennzeichnet,** daß die beiden Grundkörper (12) über elastische Puffer (28) auf einem Traggestell (29) angebracht sind.

12. Photosetzgerät nach einem der vorhergehenden Ansprüche, dadurch **gekennzeichnet,** daß das Kreiszylindersegment (11) an einem zumindest annähernd geschlossenen Kreiszylinderkörper (30) ausgebildet ist und die Traverse (13) innerhalb des Kreiszylinderkörpers (30) nahe dem vom Kreiszylindersegment (11) abgewandten Wandabschnitt (31) des Kreiszylinderkörpers (30) angeordnet, durch Durchbrechungen (39) in den Grundkörpern (12) hindurchgeführt und axial außerhalb der Stirnseiten des Kreiszylinderkörpers an den Grundkörpern (12) befestigt ist.

13. Photosetzgerät nach Anspruch 12, dadurch **gekennzeichnet,** daß die Traverse (13) eine der Krümmung des Wandabschnitts (31) angepaßte, zylindersegmentartige Form hat.

14. Photosetzgerät nach Anspruch 13, dadurch **gekennzeichnet,** daß die Traverse (13) sich in Umfangsrichtung über einen Winkel von etwa 90° und vorzugsweise über einige Grad weniger als 90° erstreckt.

15. Photosetzgerät nach Anspruch 4, dadurch **gekennzeichnet,** daß vom mittleren Balkenteil (32), an dem die Laufflächen (16) bzw. die Streifenschiene (18) angeordnet sind, in entgegengesetzten Umfangsrichtungen zylindersegmentartige schmale Ansätze (33) ausgehen.

16. Photosetzgerät nach Anspruch 13 oder 14, dadurch **gekennzeichnet,** daß in den Endbereichen der Traverse (13) axial außerhalb der Stirnseite des Kreiszylinderkörpers (30) Befestigungsblöcke (34) an der Traverse (13) angeordnet sind, die in Umfangsrichtung bis zu den Ansätzen (33) reichen und von dem Kreiszylindersegment (11) abgewandte, sich in Sekantenrichtung erstreckende ebene Befestigungsflächen (35) aufweisen, denen komplementäre Befestigungsflächen (36) der Grundkörper (12) gegenüberliegen.

17. Photosetzgerät nach Anspruch 16, dadurch **gekennzeichnet,** daß die Befestigungsblöcke (34) auch senkrecht zu den in Sekantenrichtung verlaufenden Befestigungsflächen (35) angeordnete Befestigungsflächen (37) aufweisen, denen komplementäre Befestigungsflächen (38) der Grundkörper (12) gegenüberliegen.

18. Photosetzgerät nach Anspruch 15 und 16, dadurch **gekennzeichnet,** daß ein an den Grundkörpern (12) ausgebildeter U-Halter (43) die an den Grundkörpern (12) ausgebildeten Befestigungsflächen (36, 38) trägt und die offene Seite des U-Halters (43) die Befestigungsblöcke (34) umgreift.

19. Photosetzgerät nach einem der Ansprüche 16 bis 18, dadurch **gekennzeichnet,** daß die einander zugeordneten Befestigungsflächen (35, 36; 37, 38) jeweils einen Justierabstand (a; b) aufweisen und durch abstandsveränderliche Mittel (40, 41, 42) definiert aufeinanderzu- bzw. voneinander wegbewegbar sind.

20. Photosetzgerät nach Anspruch 19, dadurch **gekennzeichnet,** daß die abstandsverändernden Mittel aus Druck- und Zugschrauben (40, 41) bestehen, welche in von den Befestigungsflächen (35, 36, 37) ausgehenden Gewindebohrungen (42) des Grundkörpers (12) bzw. der Befestigungsblöcke (34) bis zu einer der erwünschten Justierung entsprechenden Tiefe einschraubbar sind.

21. Photosetzgerät nach einem der Ansprüch 12 bis 20, dadurch **gekennzeichnet,** daß die Durchbrechung (39) in Richtung von der Traverse (13) weg eine solche Ausdehnung aufweist, daß der Schlitten (15) mit allen daran angeordneten Bauelementen durch die Durchbrechung (39) hindurch auf die Laufflächen (16) aufschiebbar sind und in das Innere des Kreiszylinderkörpers (30) einbringbar ist.

22. Photosetzgerät nach einem der Ansprüche 12 bis 21, dadurch **gekennzeichnet,** daß der Kreiszylinderkörper (30) im Bereich des Wandabschnitts (31) vorzugsweise in Höhe der Mitte der Traverse (13) einen durchgehenden Längsschlitz (44) aufweist, der durch Schlitzbreitenveränderungsmittel (45, 46, 47) überbrückt ist.

23. Photosetzgerät nach einem der Ansprüche 12 bis 22, dadurch **gekennzeichnet,** daß der Kreiszylinderkörper (30) auf einen kreiszylindrischen Ringvorsprung (48) der Grundkörper (12) aufgeschoben ist.

24. Photosetzgerät nach einem der vorhergehenden Ansprüche, dadurch **gekennzeichnet,** daß an wenigstens einem Grundkörper (12) eine sich axial zwischen den Grundkörpern (12) erstreckende, definiert angetriebene Spindel (49) drehgelagert ist, die mit einer am Schlitten (15) vorgesehenen Spindelmutter (50) zum definierten Vorschieben des Schlittens (15) zusammenwirkt.

25. Photosetzgerät nach einem der Ansprüche 12 bis 24, dadurch **gekennzeichnet,** daß der Kreiszylinderkörper (30) innerhalb des Kreiszylindersegments (11) mit geringem Abstand von einer lichtundurchlässigen steifen Abdeckung (51) umgeben ist.

**26.** Photosetzgerät nach einem der vorhergehenden Ansprüche, dadurch **gekennzeichnet,** daß die Zuführwalzenpaare (52, 53), die Umlenkwalzen (54, 55) und das Abführwalzenpaar (56, 57) enthaltenen Baugruppen an den Grundkörpern (12) angebracht sind.

**27.** Photosetzgerät nach Anspruch 26, dadurch **gekennzeichnet,** daß zur Aufnahme der erwähnten Baugruppen in den Grundkörpern (12) Ausnehmungen (59) vorgesehen sind.

**28.** Photosetzgerät nach einem der vorhergehenden Ansprüche, dadurch **gekennzeichnet,** daß die Photomaterialleitbleche (60) teilweise an dem Wandabschnitt (31) des Kreiszylinderkörpers (30) befestigt sind.

**29.** Photosetzgerät nach einem der Ansprüche 12 bis 28, dadurch **gekennzeichnet,** daß der Kreiszylinderkörper aus einem Stück besteht und durchgehend transparent ist.

**30.** Photosetzgerät nach einem der vorhergehenden Ansprüche, dadurch **gekennzeichnet,** daß am Schlitten im Winkelbereich des Wandabschnitts (31) ein Umlenkspiegel (61) im Bereich des umlaufenden Radialfahrstrahls angeordnet ist, der das bei entsprechender Winkelposition des Drehspiegels (25) auf ihn auftreffende Licht auf eine am Schlitten (15) vorgesehene Synchronisierungsdiode (62) wirft.

**Claims**

**1.** A photosetting apparatus comprising a transparent segment of a regular cylinder around which a photosensitive material can be laid with the photosensitive layer towards the inside, and a rotary mirror illuminated by a laser beam modulated in accordance with the symbols to be set, wherein the rotary mirror is arranged with the laser, the modulator and the image forming optical system on a carriage displaceable in controlled manner along the axis of said segment, and wherein the rotary mirror generates a radial scanning beam which leaves the cylinder axis and executes a rapid periodic scanning movement in the peripheral direction of said segment, characterized in that said segment (11) of a regular cylinder is held at its end faces at two plate-like basic members (12) which rest on a support (29) and which are connected into a rigid arrangement by a tie beam (13) arranged radially spaced apart from the cylinder axis (14) and carried only by the basic members (12), and in that the carriage (15) is axially displaceably held on the tie beam (13).

**2.** A photosetting apparatus in accordance with claim 1, characterized in that the tie beam is adjustable relative to the basic members (12) perpendicular to the cylinder axis.

**3.** A photosetting apparatus in accordance with claim 1 or 2, characterized in that the tie beam (13) carries radially inwardly two axially extending profiled running surfaces which are arranged spaced apart in the peripheral direction and which face towards or away from one another; and in that wheels (17) having a complementary profile and arranged outwardly on the carriage (15) contact the profiled running surfaces (16) in such a way that the carriage (15) is reliably radially held against movements in planes extending perpendicular to the cylinder axis (14) and is only movable axially.

**4.** A photosetting apparatus in accordance with claim 3, characterized in that the running surfaces (16) are formed at the opposite longitudinal edges of a strip rail (18) which is secured to the tie beam (13).

**5.** A photosetting apparatus in accordance with claim 4, characterized in that the width direction of the strip rail (18) coincides substantially with the peripheral direction or with the direction of a secant.

**6.** A photosetting apparatus in accordance with any one of the preceding claims, characterized in that the carriage (15) extends substantially radially inwardly away from the tie beam (13) and in particular from the strip rail (18), and has a carrying plate (19) for the scanning arrangement, with the carrying plate extending past the cylinder axis (14) and being radially spaced therefrom.

**7.** A photosetting apparatus in accordance with claim 6, characterized in that on the carrying plate (19) there are arranged, optically following one another, the laser (20) near to the running wheels (17) parallel to the cylinder axis (14), the modulator (21) between two deflecting mirrors (22, 23) parallel to the axes of the running wheels (17), the collimator (24) parallel to the laser (20) on the cylinder axis (14), and the rotary mirror (25) inclined at 45° to the cylinder axis (14) and lying thereon, wherein the rotary mirror is secured at the end face of a motor shaft (26) coincident with the cylinder axis (14).

8. A photosetting apparatus in accordance with anyone of the preceding claims, characterized in that the tie beam (13) is arranged at the side at the level of the cylinder axis (14) and the carrying plate (19) extends preferably substantially horizontally.

9. A photosetting apparatus in accordance with claim 8, characterized in that the running surfaces (16) lie spaced apart vertically above one another.

10. A photosetting apparatus in accordance with claims 4 and 9, characterized in that the flat side of the strip rail (18) lies in a vertical plane.

11. A photosetting apparatus in accordance with anyone of the preceding claims, characterized in that the two basic members (12) are mounted via resilient buffers (28) on a carrying frame (29).

12. A photosetting apparatus in accordance with anyone of the preceding claims, characterized in that said segment (11) is constructed on an at least approximately closed regular cylindrical body (30); and in that the tie beam (13) is arranged within the regular cylindrical body (30) near to the wall portion (31) thereof remote from said segment, extends through openings (39) in the basic members (12) and is secured to the basic members (12) axially outside of the end faces of the regular cylindrical body.

13. A photosetting apparatus in accordance with claim 12, characterized in that the tie beam (13) has a shape resembling a segment of a cylinder which is matched to the curvature of the wall portion (31).

14. A photosetting apparatus in accordance with claim 13, characterized in that the tie beam (13) extends in the peripheral direction over an angle of approximately 90° and preferably over a few degrees less than 90°.

15. A photosetting apparatus in accordance with claim 4, characterized in that cylinder segment-like narrow projections (33) emerge in opposite peripheral directions from the central beam part (32) on which the running surfaces (16) or the strip rail (18) are arranged.

16. A photosetting apparatus in accordance with claim 13 or 14, characterized in that mounting blocks (34) are arranged on the tie beam (13) in the end regions of the beam (13) axially outside of the end faces of the right cylindrical body (30), with the mounting blocks extending in the peripheral direction up to the projections (33) and having planar mounting surfaces (35) facing away from said segment which extend in the secant direction and which confront complementary mounting surfaces (36) of the basic members (12).

17. A photosetting apparatus in accordance with claim 16, characterized in that the mounting blocks (34) also have mounting surfaces (37) which extend perpendicular to the mounting surfaces (35) extending in the secant direction and which confront complementary mounting surfaces (38) of the basic members (12).

18. A photosetting apparatus in accordance with claim 15 or 16, characterized in that a U-shaped holder (43) is formed on the basic members (12) and carries the mounting surfaces (36, 38) formed on the basic members (12) and in that the open side of the U-holder (43) engages around the mounting blocks (34).

19. A photosetting apparatus in accordance with anyone of claims 16 to 18, characterized in that the respectively associated mounting surfaces (35, 36; 37, 38) each have an adjustment spacing (a; b) and can be moved in a defined manner towards or away from one another by distance varying means (40, 41, 42).

20. A photosetting apparatus in accordance with claim 19, characterized in that the distance varying means consist of compression or tension crews (40, 41) which can be threaded into threaded bores emerging from the mounting surfaces (35, 36, 37) in the basic members (12), or in the mounting blocks (34), up to a depth corresponding to the desired adjustment.

21. A photosetting apparatus in accordance with anyone of claims 12 to 20, characterized in that the opening (39) has such an extent in the direction away from the tie beam (13) that the carriage (15) with all the components arranged thereon can be pushed through the opening (39) onto the running surfaces (16) and can be introduced into the interior of the regular cylindrical body (30).

22. A photosetting apparatus in accordance with anyone of claims 12 to 21, characterized in that the regular cylindrical body (30) has a throughgoing longitudinal slot (44) in the region of said wall portion (31), preferably at the level of the center of the beam (13), with the longitudinal slot being bridged by slot width changing means (45, 46, 47).

23. A photosetting apparatus in accordance with anyone of claims 12 to 22, characterized in that the regular cylindrical body (30) is pushed onto a regular cylindrical ring projection (48) of the basic members (12).

24. A photosetting apparatus in accordance with anyone of the preceding claims, characterized in that a spindle (49) driven in defined manner and which extends axially between the basic members (12) is rotationally journalled at at least one of the basic members (12) and cooperates with a spindle nut (50) provided on the carriage (15) for the defined advance of the carriage (15).

25. A photosetting apparatus in accordance with anyone of claims 12 to 24, characterized in that the regular cylindrical body (30) is surrounded within the segment (11) at a small distance by a light impermeable rigid cover (51).

26. A photosetting apparatus in accordance with anyone of the preceding claims, characterized in that the groups of components containing the feed roller pairs (52, 53), the deflection rollers (54, 55) and the take-up roller pair (56, 57) are mounted on the basic members (12).

27. A photosetting apparatus in accordance with claim 26, characterized in that recesses (59) are provided in the basic members (12) to accomodate said groups of components.

28. A photosetting apparatus in accordance with anyone of the preceding claims, characterized in that the sheet metal guides (60) for the photosensitive material are partly mounted on the wall section (31) of the regular cylindrical body (30).

29. A photosetting apparatus in accordance with anyone of claims 12 to 28, characterized in that the regular cylindrical body consists of one piece and is transparent throughout.

30. A photosetting apparatus in accordance with anyone of the preceding claims, characterized in that a deflecting mirror (61) is arranged on the carriage in the angular range of the wall section (31) in the region of the rotation radial scanning beam and projects the light which falls on it at a corresponding angular position of the rotary mirror (25) onto a synchronisation diode (62) provided on the carriage (15).

## Revendications

1. Appareil de photocomposition comprenant un segment transparent de cylindre droit autour duquel peut être placé un matériau photosensible, avec la couche photosensible tournée vers l'intérieur, et un miroir tournant sur lequel tombe un rayon laser modulé en fonction des motifs à composer, le miroir tournant étant disposé avec le laser, le modulateur et l'optique de formation d'image sur un chariot déplaçable de façon commandée le long de l'axe du segment de cylindre droit et produisant un rayon à trajet radial issu de l'axe du cylindre et décrivant un mouvement de balayage périodique rapide dans la direction périphérique du segment de cylindre droit, caractérisé en ce que le segment de cylindre droit (11) est maintenu frontalement sur deux corps de base (12) en forme de plaque reposant sur un sommier (29), les corps de base étant reliés en un ensemble rigide au moyen d'une traverse (13) disposée à distance de l'axe du cylindre (14) et portée seulement par les corps de base, et en ce que le chariot (15) est monté axialement mobile sur la traverse (13).

2. Appareil de .photocomposition selon la revendication 1, caractérisé en ce que la traverse (13) est réglable par rapport aux corps de base (12) perpendiculairement à l'axe du cylindre (14).

3. Appareil de photocomposition selon l'une des revendications 1 ou 2, caractérisé en ce que la traverse (13) porte radialement à l'intérieur deux surfaces de déplacement (16) profilées qui s'étendent axialement, sont disposées en écartement suivant la direction périphérique et sont dirigées l'une vers l'autre ou en opposition l'une de l'autre, sur lesquelles viennent en contact des galets de déplacement profilés complémentaires (17) montés radialement vers l'extérieur sur le chariot (15), de telle manière que le chariot (15) est maintenu de façon sûre contre des déplacements dans des plans perpendiculaires à l'axe du cylindre (14) et ne peut se déplacer qu'axialement.

4. Appareil de photocomposition selon la revendication 3, caractérisé en ce que les surfaces de déplacement (16) sont formées sur les arêtes longitudinales opposées d'un rail (18) en forme de bande qui est fixé à la traverse (13).

5. Appareil de photocomposition selon la revendication 4, caractérisé en ce que la direction de la largeur du rail en forme de bande (18) coincide essentiellement avec la direction périphérique ou avec la direction d'une sécante.

6. Appareil de photocomposition selon l'une des revendications précédentes, caractérisé en ce que le chariot (15) s'étend essentiellement radialement vers l'intérieur depuis la traverse (13) et en particulier depuis le rail en forme de bande (18) et comporte une platine de support (19) pour l'ensemble de balayage, ladite platine passant à distance le long de l'axe du cylindre (14).

7. Appareil de photocomposition selon la revendication 6, caractérisé en ce que le laser (20), le modulateur (21), le collimateur (24) et le miroir tournant (25) sont montés sur la platine de support (19) optiquement à la suite les uns des autres, le laser (20) étant situé au voisinage des galets de déplacement (17) parallèlement à l'axe du cylindre (14), le modulateur étant situé parallèlement aux axes des galets de déplacement (17) entre deux miroirs de renvoi (22, 23), le collimateur (24) étant situé parallèlement au laser (20) sur l'axe du cylindre (14) et le miroir tournant (25), passant par l'axe du cylindre (14) et incliné à 45° par rapport à celui-ci, étant fixé sur la face frontale d'un arbre de moteur (26) coaxial à l'axe du cylindre (14).

8. Appareil de photocomposition selon l'une des revendications précédentes, caractérisé en ce que la traverse est disposée latéralement à la hauteur de l'axe du cylindre (14) et en ce que la platine de support (19) s'étend de préférence essentiellement verticalement.

9. Appareil de photocomposition selon la revendication 8, caractérisé en ce que les surfaces de déplacement (16) sont situées l'une au dessus de l'autre avec un écartement vertical.

10. Appareil de photocomposition selon les revendications 4 et 9, caractérisé en ce que le côté aplati du rail en forme de bande (18) est situé dans un plan vertical.

11. Appareil de photocomposition selon l'une des revendications précédentes, caractérisé en ce que les deux corps de base (12) sont montés sur un cadre porteur (29) au moyen d'amortisseurs élastiques (28).

12. Appareil de photocomposition selon l'une des revendications précédentes, caractérisé en ce que le segment de cylindre droit (11) est formé sur un corps de cylindre droit (30) au moins pratiquement fermé et en ce que la traverse (13), montée à l'intérieur du corps de cylindre droit (30) au voisinage de la partie de paroi (31) du corps de cylindre droit (30) qui est éloignée du segment de cylindre droit (11), passe à travers des passages (39) dans les corps de base (12) et est fixée sur les corps de base (12) axialement à l'extérieur des faces frontales du corps de cylindre droit.

13. Appareil de photocomposition selon la revendication 12, caractérisé en ce que la traverse (13) a une forme de segment de cylindre adaptée à la courbure de la partie de paroi (31).

14. Appareil de photocomposition selon la revendication 13, caractérisé en ce que la traverse (13) s'étend en direction périphérique sur un angle d'environ 90° et de préférence inférieur de quelques degrés à 90°.

15. Appareil de photocomposition selon la revendication 4, caractérisé en ce que des projections étroites en forme de segment de cylindre (33) font saillie en directions périphériques opposées à partir de la partie centrale de poutre (32) sur laquelle sont disposées les surfaces de déplacement (16), ou les rails en forme de bande (18).

16. Appareil de photocomposition selon l'une des revendications 13 ou 14, caractérisé en ce que des blocs de fixation (34) sont montés sur la traverse (13) axialement à l'extérieur de la paroi frontale du corps de cylindre droit (30), lesdits blocs de fixation atteignant en direction périphérique les projections (33) et présentant des surfaces de fixation planes (35) qui s'étendent dans la direction de la sécante, sont dirigées à l'opposé du segment de cylindre droit (11), et font face à des surfaces de fixation complémentaires (38) des corps de base (12).

17. Appareil de photocomposition selon la revendication 16, caractérisé en ce que les blocs de fixation (34) présentent également des surfaces de fixation (37) perpendiculaires aux surfaces de fixation (35) qui s'étendent dans la direction de la sécante, ces surfaces de fixation perpendiculaires (37) faisant face à des surfaces de fixation complémentaires (38) des corps de base (12).

18. Appareil de photocomposition selon les revendications 15 et 16, caractérisé en ce qu'un support en U (43) formé sur les corps de base (12) porte les surfaces de fixation (36, 38) formées sur les corps de base (12) et en ce que le côté ouvert du support en U (43) est engagé autour des blocs de fixation (34).

19. Appareil de photocomposition selon l'une des revendications 16 à 18, caractérisé en ce que les surfaces de fixations associées l'une à l'autre (35, 36; 37, 38) présentent respectivement une distance de réglage (a; b) et peuvent être déplacées de manière définie à l'aide de moyens de variation de distance en rapprochement ou en éloignement l'une de l'autre.

20. Appareil de photocomposition selon la revendication 19, caractérisé en ce que les moyens de variation de distance comprennent des vis de poussée et de traction (40, 41) qui peuvent être vissées jusqu'à une profondeur correspondant au réglage désiré dans des perçages taraudés (42) du corps de base (12) ou des blocs de fixation (34), ces perçages partant des surfaces de fixation (35, 36, 37).

21. Appareil de photocomposition selon l'une des revendications 12 à 20, caractérisé en ce que le passage (39) présente, dans la direction s'éloignant de la traverse (13), une extension telle que le chariot (15) avec tous les composants montés sur celui-ci peuvent être déplacés à travers ledit passage (39) sur les surfaces de déplacement (16) et peut être amené à l'intérieur du corps de cylindre droit (30).

22. Appareil de photocomposition selon l'une des revendications 12 à 21, caractérisé en ce que le corps de cylindre droit (30) présente une fente longitudinale continue (44) dans la région de la partie de paroi (31), de préférence à la hauteur du milieu de la traverse (13), la fente longitudinale étant traversée par des moyens de variation de largeur de la fente (45, 46, 47).

23. Appareil de photocomposition selon l'une des revendications 12 à 22, caractérisé en ce que le corps de cylindre droit (30) est enfilé sur une projection annulaire en forme de cylindre droit (48) des corps de base (12).

24. Appareil de photocomposition selon l'une des revendications précédentes, caractérisé en ce qu'un arbre (49) entrainé de manière définie et s'étendant axialement entre les corps de base (12) est monté rotatif sur l'un au moins des corps de base (12), ledit arbre coopérant avec un écrou (50) prévu sur le chariot (15) pour déplacer le chariot (15) de façon définie.

25. Appareil de photocomposition selon l'une des revendications 12 à 24, caractérisé en ce que le corps de cylindre droit (30) est entouré à faible distance par une couverture opaque rigide (51) à l'intérieur du segment de cylindre droit (11).

26. Appareil de photocomposition selon l'une des revendications précédentes, caractérisé en ce que les groupes structurels contenant la paire de rouleaux d'alimentation (52, 53), les rouleaux de déviation (54, 55) et la paire de rouleaux de sortie (56, 57) sont montés sur les corps de base (12).

27. Appareil de photocomposition selon la revendication 26, caractérisé en ce que des ouvertures (59) sont prévues pour recevoir lesdits groupes structurels dans les corps de base (12).

28. Appareil de photocomposition selon l'une des revendications précédentes, caractérisé en ce que les plaques guides (60) du matériau photosensible sont partiellement fixées sur la partie de paroi (31) du corps de cylindre droit (30).

29. Appareil de photocomposition selon l'une des revendications 12 à 28, caractérisé en ce que le corps de cylindre droit est d'une seule pièce et entièrement transparent.

30. Appareil de photocomposition selon l'une des revendications précédentes, caractérisé en ce qu'un miroir de renvoi (61) est monté sur le chariot dans la zone angulaire de la partie de paroi (31) dans la région du rayon à trajet radial en rotation, le miroir de renvoi renvoyant la lumière qui l'atteint pour une position angulaire correspondante du miroir rotatif (25) sur une diode de synchronisation (62) prévue sur le chariot (15).

# FIG.1

# FIG.2

# FIG.3

EP 0 217 136 B1

FIG.4

# FIG. 5

# FIG. 6